Europäisches Patentamt

European Patent Office

Office européen des brevets

(11) Veröffentlichungsnummer: **0 486 757 A1**

# (12) EUROPÄISCHE PATENTANMELDUNG

(21) Anmeldenummer: **91109773.1**

(22) Anmeldetag: **14.06.91**

(51) Int. Cl.5: **F01P 7/16**, G05D 23/13

(30) Priorität: **17.11.90 DE 9015766 U**
**24.04.91 DE 9105021 U**

(43) Veröffentlichungstag der Anmeldung:
**27.05.92 Patentblatt 92/22**

(84) Benannte Vertragsstaaten:
**DE FR GB IT**

(71) Anmelder: **Gustav Wahler GmbH u. Co**
**Hindenburgstr. 146**
**W-7300 Esslingen(DE)**

(72) Erfinder: **Wahler, Hans, Dipl.-Ing.**
**Hölderlinweg 136**
**W-7300 Esslingen(DE)**

(74) Vertreter: **Kratzsch, Volkhard, Dipl.-Ing.**
**Mülbergerstrasse 65**
**W-7300 Esslingen(DE)**

(54) **Thermostatventil zur Regelung der Temperatur der Kühlflüssigkeit einer Brennkraftmaschine.**

(57) Es wird ein Thermostatventil (10) zur Regelung der Temperatur der Kühlflüssigkeit einer Brennkraftmaschine vorgeschlagen, bei dem als Widerlager (25) für den Arbeitskolben (14) eines den Ventilteller (17) betätigenden Dehnstoffthermostats ein verstellbares und dazu koaxiales Abstützteil (26) vorgesehen ist, welches mittels eines Stellorgans (36), insbesondere thermostatischen Arbeitselements (37), unter Verstellung des Arbeitsbereichs des Thermostatventils (10) verstellbar ist. Das Stellorgan (36) ist zum Arbeitselement (13) koaxial außerhalb des Ventilgehäuses (11) angebracht und dort mittels einer Bördelverbindung (54) befestigt. Unabhängig von der jeweiligen Befestigung ist das Stellorgan (36) zumindest bereichsweise ohne unmittelbaren Berührungskontakt mit dem Ventilgehäuse (11) gehalten und dadurch letzterem gegenüber wärmeisoliert.

Fig. 2

EP 0 486 757 A1

Rank Xerox (UK) Business Services

Die Erfindung bezieht sich auf ein Thermostatventil zur Regelung der Temperatur der Kühlflüssigkeit einer Brennkraftmaschine der im Oberbegriff des Anspruchs 1 genannten Art.

Bei einem bekannten Thermostatventil dieser Art (DE-OS 37 05 232, DE-OS 33 15 308) ist das zum temperaturabhängigen Arbeitselement koaxiale Stellorgan, das insbesondere als temperaturabhängiges Arbeitselement ausgebildet ist, am Ventilgehäuse in einer Bohrung gehalten. Diese Halterung hat die axialen Abstützkräfte für den Arbeitskolben des temperaturabhängigen Arbeitselements aufzunehmen. Eine reine axiale Zentrierung in einer Bohrung genügt dem meist nicht.

Der Erfindung liegt die Aufgabe zugrunde, ein Thermostatventil der eingangs genannten Art so auszubilden, daß dabei das Stellorgan zuverlässig und derart fest am Ventilgehäuse gehalten ist, daß das Stellorgan einerseits leicht montierbar und befestigbar und andererseits in der Lage ist, die axialen Abstützkräfte für den Arbeitskolben des thermostatischen Arbeitselements ohne Veränderung der Axialposition dieses Stellorgans aufzunehmen.

Die Aufgabe ist bei einem Thermostatventil der im Oberbegriff des Anspruchs 1 genannten Art erfindungsgemäß durch die Merkmale im Kennzeichnungsteil des Anspruchs 1 gelöst. Dadurch, daß das Stellorgan durch eine Bördelverbindung am Ventilgehäuse befestigt ist, läßt sich das Stellorgan schnell und einfach anbringen und durch formschlüssige Verbindung in Axialrichtung derart fest mit dem Ventilgehäuse verbinden, daß das Stellorgan eine zuverlässige Axialabstützung für den Arbeitskolben des thermostatischen Arbeitselements gewährleistet und seine Axialposition am Ventilgehäuse nicht etwa unter dem Einfluß der vom Arbeitskolben des thermostatischen Arbeitselements her wirkenden Axialkräfte verändert wird. Bei allem ist das Thermostatventil einfach und kostengünstig. Die Erfindung schafft dabei die Voraussetzungen dafür, die Aufnahme für das Stellorgan bei der Herstellung des Ventilgehäuses z.B. als Formteil gleich einbaufertig mit vorzusehen, so daß das Stellorgan lediglich einzusetzen und dann durch Umbördeln eines Bördelrandes axial fest mit dem Ventilgehäuse zu verbinden ist, wobei bedarfsweise zur Abdichtung des Ventilgehäuseinneren nach außen eine Dichtung vorgesehen werden kann.

Ganz gleich, in welcher Weise das Stellorgan am Ventilgehäuse gehalten und daran befestigt ist, ergibt sich dort, wo beide miteinander in Berührungskontakt stehen, ein unerwünschter Wärmeübergang vom Ventilgehäuse zum Stellorgan, der zu einer unerwünschten und unkontrollierten Erwärmung des Stellorgans und damit zu einer unerwünschten und unkontrollierten Veränderung der Charakteristik führen kann. Es ist daher ferner Aufgabe der Erfindung, ein Thermostatventil der im Anspruch 2 genannten Gattung, bei dem das Stellorgan in beliebiger Weise am Ventilgehäuse gehalten ist, zu schaffen, bei dem mit einfachen Mitteln eine Wärmebeeinflussung des Stellorgans vom Ventilgehäuse und dessen Inneren her vermieden ist. Diese Aufgabe ist bei einem Thermostatventil der im Oberbegriff des Anspruchs 2 genannten Art erfindungsgemäß durch die Merkmale in dessen Kennzeichnungsteil gelöst. Dadurch, daß das Stellorgan zumindest bereichsweise ohne unmittelbaren Berührungskontakt, insbesondere metallischen Berührungskontakt, mit dem metallischen Ventilgehäuse gehalten ist, ist das Stellorgan in Bezug auf das Ventilgehäuse wärmeisoliert, so daß eine Wärmebeeinflussung des Stellorgans vom Ventilgehäuse her verhindert ist.

Vorteilhafte weitere Erfindungsmerkmale hierzu ergeben sich aus den Ansprüchen 2 bis 14. Dadurch ist in einfacher Weise eine Wärmeisolierung zwischen dem Stellorgan einerseits und dem Ventilgehäuse andererseits auf den Bereichen erreicht, wo beide miteinander in Berührungskontakt stehen.

Die vorgenannte Aufgabe wird bei einem Thermostatventil der Gattung gemäß Anspruch 15, die derjenigen des Anspruchs 2 entspricht, gemäß einer weiteren eigenständigen Erfindungslösung durch die Merkmale im Kennzeichnungsteil des Anspruchs 15 gelöst. Dadurch, daß das Stellorgan und/oder das Ventilgehäuse zumindest bereichsweise und dort, wo beide miteinander in Berührungskontakt stehen, Isoliermaterial, z.B. Kunststoff, aufweisen, insbesondere aus derartigem Isoliermaterial bestehen, ist ebenfalls in einfacher und kostengünstiger Weise eine Wärmeisolierung des Stellorgans in Bezug auf das Ventilgehäuse erreicht. Dabei schließt diese Erfindungslösung auch Einlagen aus entsprechendem Isoliermaterial zwischen beiden Komponenten ein, ebenso wie eine zumindest bereichsweise Gestaltung von Wänden des Stellorgans und/oder des Ventilgehäuses aus derartigem Isoliermaterial, z.B. aus Kunststoff, und zwar dort, wo beide Teile miteinander in Berührungskontakt stehen. Es kann hierzu ausreichend sein, den Bereich des Ventilgehäuses, an dem das Stellorgan gehalten ist, aus Isoliermaterial, z.B. Kunststoff, zu gestalten, oder damit auszufüttern. Statt dessen oder zusätzlich dazu kann es beim Stellorgan ausreichend sein, dessen Wandbereiche, die mit dem Ventilgehäuse in Berührungskontakt stehen, aus Isoliermaterial, z.B. Kunststoff, zu gestalten oder damit zu umkleiden.

Weitere vorteilhafte Erfindungsmerkmale und Ausgestaltungen ergeben sich aus den Ansprüchen 16 bis 28, wobei diese Gestaltungen gleichermaßen für die Bördelbefestigung gemäß Anspruch 1 oder auch für die Lösungen gemäß Anspruch 2 bis 15, die die Wärmeisolierung betreffen, zum Einsatz kommen können. Es versteht sich, daß die die Wärmeisolierung betreffenden Merkmale, insbesondere Ansprüche 2 bis 15, für jegliche Art der Befestigung des Stellorgans am Ventilgehäuse bestimmt sind.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:

Fig. 1    einen schematischen, axialen Längsschnitt eines Thermostatventils gemäß einem ersten Ausführungsbeispiel,

Fig. 2    einen Schnitt entsprechend demjenigen in Fig. 1 eines Thermostatventils gemäß einem zweiten Ausführungsbeispiel.

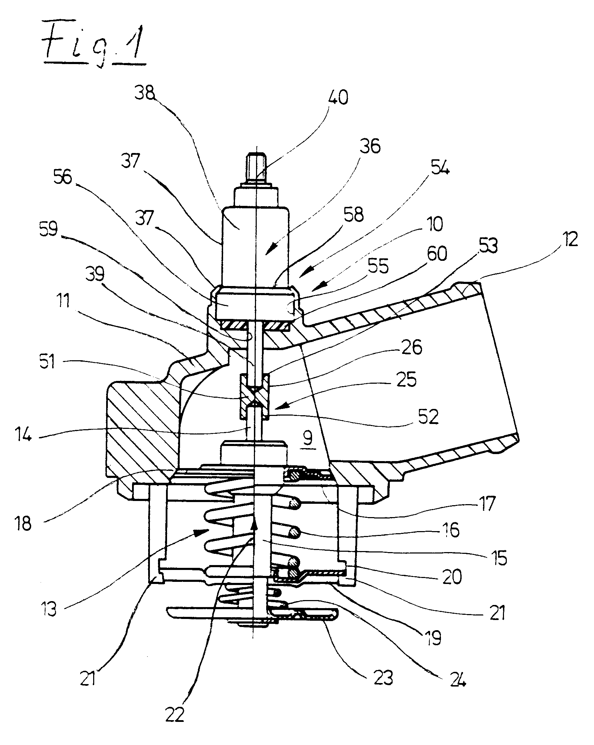

Das in Fig. 1 gezeigte Thermostatventil 10 ist z.B. ähnlich demjenigen gemäß DE-OS 33 15 308 oder 37 05 232 ausgebildet und dient zur Regelung der Temperatur der Kühlflüssigkeit einer nicht gezeigten Brennkraftmaschine, insbesondere eines Kraftfahrzeugmotors. Das Thermostatventil 10 regelt den Kühlmittelfluß von der nicht weiter gezeigten Brennkraftmaschine durch einen Bypaß und/oder durch einen nicht gezeigten Wärmeaustauscher (Kühler) zurück zur Brennkraftmaschine.

Das Thermostatventil 10 weist ein Ventilgehäuse 11 auf, das einen Anschlußstutzen 12 hat, über den das Kühlmittel zum Wärmeaustauscher führbar ist. Im Ventilgehäuse 11 ist ein thermostatisches Arbeitselement 13 angeordnet, das einen Arbeitskolben 14 und ein Gehäuse 15 aufweist, in dem sich in bekannter Weise ein Dehnstoff befindet, der sich bei Erwärmung ausdehnen kann und dabei den Arbeitskolben 14 relativ zum Gehäuse 15 ausschieben kann. Bei Abkühlung verringert der Dehnstoff sein Volumen. Der Arbeitskolben 14 wird dann unter der Wirkung einer Ventilfeder 16 relativ zum Gehäuse 15 wieder in die Ausgangsstellung verschoben, d.h. in das Gehäuse 15 hineingedrückt.

Am Gehäuse 15 des Arbeitselements 13 ist ein Ventilteller 17 befestigt, der z.B. aufgepreßt, aufgebördelt oder in sonstiger Weise fest angebracht ist.

Der Ventilteller 17 bildet das Ventilverschlußglied des Thermostatventiles 10. Seinem äußeren Rand ist ein z.B. etwa kegelstumpfförmiger Ventilsitz 18 im Ventilgehäuse 11 zugeordnet. Die Ventilfeder 16 ist mit einem Ende mittels eines Bügels 19 od.dgl. axial abgestützt, der seinerseits in Aussparungen 20 herabhängender Arme 21 des Ventilgehäuses 11 gehalten ist. Das andere Ende der Ventilfeder 16 ist am Ventilteller 17 abgestützt und bestrebt, den Ventilteller 17 in die Ventilschließrichtung gemäß Pfeil 22 und gegen den Ventilsitz 18 zu drücken. Diesen geschlossenen Zustand zeigt die Zeichnung. Das aus dem Ventilteller 17 und dem zugeordneten Ventilsitz 18 gebildete Ventil verschließt oder öffnet die Verbindung zwischen einem nicht gezeigten Zulauf, der z.B. im Bereich der Arme 21 und in einem dortigen Gehäuse vorgesehen sein kann, und dem zum Wärmeaustauscher, insbesondere Kühler, führenden Anschlußstutzen 12.

Auf dem Gehäuse 15 ist gleitbeweglich ein weiterer Ventilteller 23 angeordnet, der mittels einer Feder 24 am Gehäuse 15 abgestützt ist. Der Ventilteller 23 dient in bekannter Weise der Steuerung eines nicht gezeigten, in einem Anschlußgehäuse enthaltenen Bypaßkanales und damit dem direkten Rücklauf der Kühlflüssigkeit zurück zum Motor.

Der Arbeitskolben 14 des Thermostatventils 10 ist axial an einem Widerlager abgestützt, das allgemein mit 25 bezeichnet ist. Die Zeichnung zeigt das Thermostatventil 10 in der Ausgangsstellung bei kalter Brennkraftmaschine. Wird die Brennkraftmaschine gestartet, so wird das Arbeitselement 13 mit der vom Motor her kommenden Kühlflüssigkeit beaufschlagt, die zunächst bei niedriger Temperatur und geöffnetem Ventilteller 23 in den nicht gezeigten Bypaßkanal geleitet wird, während aufgrund des geschlossenen Ventiltellers 17 die Kühlflüssigkeit nicht in das Innere 9 des Ventilgehäuses 11 und in den Anschlußstutzen 12 gelangen kann. Mit zunehmender Erwärmung der Kühlflüssigkeit dehnt sich der Dehnstoff im Gehäuse 15 aus. Wenn eine durch die Auslegung des Dehnstoffes festgelegte Temperatur erreicht wird, wird der Arbeitskolben 14 nach einer bestimmten, vom Dehnstoff abhängigen Charakteristik über einen bestimmten Arbeitsbereich ausgefahren. Da der Arbeitskolben 14 am Widerlager 25 axial abgestützt ist, hat dies eine Relativverschiebung des Gehäuses 15 entgegen dem Pfeil 22 und der Ventilschließrichtung gegen die Wirkung der Ventilfeder 16 zur Folge. Das Gehäuse 15 wird zunächst axial so bewegt, daß über einen gewissen Temperaturbereich nun sowohl der Ventilteller 17 als auch der Ventilteller 23 des Bypaßventiles geöffnet sind. Bei anschließender weiterer Erhöhung der Temperatur wird durch weiteres Ausschieben des Gehäuses 15 gegensinnig zum Pfeil 22 das Bypaßventil über den Ventilteller 23 geschlossen, während das andere Ventil 17, 18 nun völlig geöffnet ist.

In dieser Funktionsweise ist das Thermostatventil 10, insbesondere das thermostatische Arbeitselement 13, auf einen Temperaturbereich festgelegt, in welchem der Arbeitskolben 14 mit linearer Bewegung aus dem Gehäuse 15 ausgefahren wird. Dieser Temperaturbereich ist durch die Wahl des Dehnstoffes und sonstige Parameter festgelegt.

Das Widerlager 25 ist axial verstellbar, wodurch der Arbeitsbereich des Thermostatventils 10 durch einen Eingriff von außen verändert werden kann.

Das Widerlager 25 weist ein axial verstellbares Abstützteil 26 auf. Das Abstützteil 26 besteht hier aus einer Hülse 51 mit beidseitigen Bohrungen 52, 53, die koaxial zueinander verlaufen und gegensinnig zueinander offen sind. Das Abstützteil 26 ist mittels eines Stellorgans 36 in Ventilschließrichtung gemäß Pfeil 22 und gegensinnig dazu, also in Zug- und Druckrichtung, verstellbar. Das Stellorgan 36 kann in verschiedenster Weise als von außen steuerbares Element ausgestaltet sein. Beim gezeigten Ausführungsbeispiel ist das Stellorgan 36 in besonders vorteilhafter Weise als temperaturabhängiges Arbeitselement 37 ähnlich dem thermostatischen Arbeitselement 13 ausgebildet. Dabei ist das Stellorgan 36 insbesondere als Dehnstoffelement ausgebildet, das in einem Gehäuse 38 Dehnstoff enthält, in den ein Kolben 39 eintaucht, der aus dem Gehäuse 38 herausgeführt ist. Das temperaturabhängige Arbeitselement 37 ist beheizbar. Zur Beheizung dient z.B. ein elektrisches Heizelement 40, das hier in bekannter Weise aus einem PTC-Element besteht.

Dieses so gestaltete Stellorgan 36, insbesondere temperaturabhängige Arbeitselement 37, ist koaxial zum Arbeitskolben 14 angeordnet. Es befindet sich auf der dem Arbeitskolben 14 benachbarten Axialseite. Das Abstützteil 26 in Form der Hülse 51 ist mit dem Kolben 39 und bedarfsweise auch mit dem Arbeitskolben 14 in Zug- und Druckrichtung fest verbunden. Durch Axialverschiebung des Kolbens 39 ist eine axiale, in Ventilschließrichtung gemäß Pfeil 22 oder gegensinnig dazu gerichtete Stellkraft erzeugbar, die über das Abstützteil 26 eine Axialverstellung des Arbeitskolbens 14 zur Folge hat. Wird beim Stellorgan 36 dessen Kolben 39 z.B. in Ventilschließrichtung gemäß Pfeil 22 und somit axial weiter nach oben verschoben, so wird über das Abstützteil 26 auch der z.B. damit fest verbundene Arbeitskolben 14 axial weiter nach oben verschoben, was beim Arbeitselement 13 z.B. einer höheren Öffnungstemperatur entspricht. Eine gegensinnige Axialbewegung entgegen der Ventilschließrichtung gemäß Pfeil 22 hat eine gegensinnige Axialverschiebung des Arbeitskolbens 14 in der Zeichnung nach unten zur Folge, was einer niedrigeren Öffnungstemperatur beim Arbeitselement 13 entspricht. Soll der Arbeitsbereich des thermostatischen Arbeitselements 13 z.B. auf eine niedrigere Ansprechtemperatur verstellt werden, so wird der das Heizelement 40 speisende Stromkreis geschlossen. Das elektrische Heizelement 40 heizt sich auf, so daß der im Gehäuse 38 enthaltene Dehnstoff sich ausdehnt. Dies hat eine Relativverschiebung zwischen dem Gehäuse 38 und dem Kolben 39 in Achsrichtung nach unten zur Folge, wodurch der Arbeitsbereich des Thermostatventils 10 auf einen solchen niedrigerer Arbeitstemperatur verstellt wird. Soll statt dessen eine andere Arbeitsstellung für das Thermostatventil 10 erreicht werden, so wird der das elektrische Heizelement 40 speisende Stromkreis geöffnet. Die Heizung und damit die Erwärmung des Arbeitselements 37 wird damit unterbrochen, so daß das Arbeitselement 37 sich wieder abkühlen kann. Die Abkühlung hat eine Volumenverringerung des Dehnstoffes im Gehäuse 38 zur Folge. Dadurch wird der Kolben 39 relativ zum Gehäuse 38 in Ventilschließrichtung gemäß Pfeil 22 in eine andere Stellung verschoben. In dieser Stellung ist das temperaturabhängige Arbeitselement 13 auf eine höhere Öffnungstemperatur eingestellt, so daß es erst bei höherer Temperatur der Kühlflüssigkeit in eingangs beschriebener Weise öffnet.

Das Stellorgan 36, insbesondere temperaturabhängige Arbeitselement 37, ist am Ventilgehäuse 11 gehalten. Es befindet sich dabei außerhalb des Inneren 9 des Ventilgehäuses 11. Dabei ist das Stellorgan 36, insbesondere temperaturabhängige Arbeitselement 37, am Ventilgehäuse 11 durch eine Bördelverbindung 54 befestigt. Das Ventilgehäuse 11 enthält eine Aufnahmeöffnung 55, in der das Stellorgan 36, insbesondere temperaturabhängige Arbeitselement 37, mit zumindest einem Längenabschnitt 56 aufgenommen und gehalten ist. Mit dem Längenabschnitt 56 ist das Stellorgan 36 in diese Aufnahmeöffnung 55 eingepaßt, wobei das Stellorgan 36 darin durch eine Steckverbindung gehalten sein kann. Auf jeden Fall bewirkt die Aufnahmeöffnung 55 und der darin eingepaßte Längenabschnitt 56 eine sichere Zentrierung des Stellorgans 36 in bezug auf dessen Längsmittelachse und die dazu koaxiale Längsmittelachse des thermostatischen Arbeitselements 13.

Das Ventilgehäuse 11 weist am freien Ende der Aufnahmeöffnung 55 einen Bördelrand 57 auf, der nach Einsetzen des Stellorgans 36 zu diesem hin umgebogen wird und einen radialen Vorsprung 58, insbesondere eine Ringschulter, des Stellorgans 36 formschlüssig übergreift.

Das Ventilgehäuse 11 ist als Formteil, z.B. aus Aluminium-Druckguß, ausgebildet, an dem die Aufnahmeöffnung 55 mit Bördelrand 57 ausgeformt ist. Die Aufnahmeöffnung 55 ist so ausgerichtet, daß das Stellorgan 36 und dessen Kolben 39 koaxial zum Arbeitskolben 14 angeordnet ist, wobei das Stellorgan 36 auf der dem Arbeitskolben 14 benachbarten Axialseite und dabei außerhalb des Inneren 9 des Ventilgehäuses 11 angeordnet ist. Der Kolben 39 des temperaturabhängigen Arbeitselementes 37 ist durch eine im Ventilgehäuse 11 enthaltene Durchgangsöffnung 59, z.B. Bohrung, hindurch in das Innere 9 des Ventilgehäuses 11 und zur Hülse 51 geführt. Zur Abdichtung des Inneren 9 im Bereich dieser Durchgangsöffnung 59 nach außen ist zwischen dem Arbeitselement 37 und dem Ventilgehäuse 11 eine Dichtung 60 angeordnet. Die Dichtung 60 besteht z.B. aus einer Dichtungsscheibe, einem Dichtungsring, z.B. O-Ring od. dgl.

Das Thermostatventil 10 ist einfach, kostengünstig und läßt sich mit einfachen Mitteln und baukastenähnlich zusammensetzen, da z.B. die thermostatischen Arbeitselemente 13 und 37 baugleich oder zumindest funktionsgleich sein können, wobei deren Arbeitskolben 14 bzw. Kolben 39 in die Bohrung 52 bzw. 53 der Hülse 51 eingreifen und mit letzterer z.B. fest verbunden sind. Das Thermostatventil 10 hat ferner den Vorteil, daß das Stellorgan 36, insbesondere temperaturabhängige Arbeitselement 37, schnell, einfach und kostengünstig mit dem Ventilgehäuse 11 fest verbunden werden kann. Irgendwelche Zerspanungsarbeiten für die Befestigung am Ventilgehäuse 11 sind nicht notwendig, wenn das Ventilgehäuse 11 in vorteilhafter Weise aus einem Formteil, z.B. aus Aluminium-Druckguß, gebildet wird, bei dem die Aufnahmeöffnung 55 mit endseitigem, im Querschnitt z.B. reduzierten Bördelrand 57 gleich mit ausgeformt ist. Es ist dann lediglich notwendig, das Stellorgan 36, insbesondere temperaturabhängige Arbeitselement 37, in die Aufnahmeöffnung 55 einzusetzen und den Bördelrand 57 hinter dem radialen Vorsprung 58, z.B. der am Gehäuse 38 ausgebildeten Ringschulter, umzubördeln, so daß dann eine verliersichere und mechanisch feste axiale Fixierung des Stellorganes 36 am Ventilgehäuse 11 gewährleistet ist, die in der Lage ist, die axialen Stützkräfte für den Arbeitskolben 14 aufzunehmen.

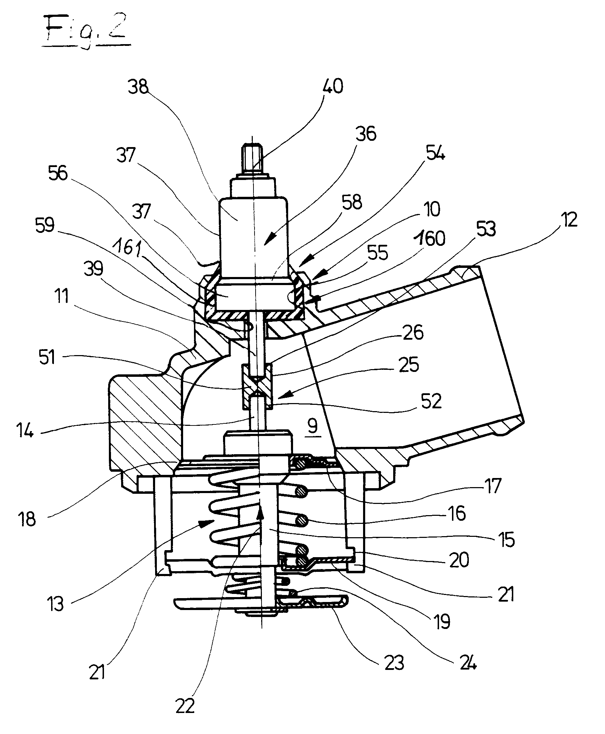

Das in Fig. 2 gezeigte Thermostatventil entspricht-mit einer nachfolgend erläuterten Ausnahme-vollständig dem ersten Ausführungsbeispiel gemäß Fig. 1. Aus diesem Grund sind für die gleichen Bauteile und Elemente die gleichen Bezugszeichen verwendet.

Beim zweiten Ausführungsbeispiel in Fig. 2 ist das Stellorgan 36 ebenfalls mit einem unteren Längenabschnitt 56 in einer nach oben offenen Aufnahmeöffnung 55 des Ventilgehäuses 11 aufgenommen und durch eine Bördelverbindung 54 am Ventilgehäuse 11 befestigt. Beim zweiten Ausführungsbeispiel gemäß Fig. 2 kommt es aber nicht auf die Form der Befestigung des Stellorgans 36 am Ventilgehäuse 11 an, so daß die Bördelverbindung 54 nur ein Anschauungsbeispiel für eine der vielen möglichen Befestigungsarten ist. Das Stellorgan 36 kann ebensogut z.B. in eine Aufnahmeöffnung 55 des Ventilgehäuses 11 eingeschraubt werden oder statt dessen mit der nach unten weisenden Stirnseite des Längenabschnitts 56 flächig an einer zugewandten Fläche des Ventilgehäuses 11 befestigt sein, z.B. festgeklemmt, festgeschraubt, festgespannt oder in sonstiger Weise angebracht sein. Jegliche Befestigungsart ist im Zusammenhang mit der nachfolgend erläuterten Besonderheit des zweiten Ausführungsbeispieles in Fig. 2 möglich.

Beim zweiten Ausführungsbeispiel in Fig. 2 ist das Stellorgan 36 zumindest bereichsweise ohne unmittelbaren Berührungskontakt mit dem Ventilgehäuse 11 gehalten. Da das Ventilgehäuse 11 in der Regel aus Metall besteht, ist also kein metallischer Berührungskontakt zwischen dem Stellorgan 36 und dem Ventilgehäuse 11 gegeben. Dies ist dadurch erreicht, daß zwischen den Bereichen des Stellorgans 36, die mit dem Ventilgehäuse 11 in Verbindung stehen, und diesen Bereichen zugeordneten Bereichen des Ventilgehäuses 11 eine Isolierung 160 vorgesehen ist. Die Isolierung 160 ist als Wärmeisolierung ausgebildet. Sie kann z.B. aus einer Gas- oder Flüssigkeitsschicht, z.B. aus einer Luftschicht, gebildet sein. Statt dessen ist auch die Bildung der Isolierung 160 aus einer pastösen Schicht, z.B. aus einer Isolierpaste, möglich. Die Isolierung 160 kann auch aus einem Isolierfilm gebildet sein, z.B. einem solchen, der durch Spritzen, Lackieren, Schmelzen od.dgl. aufgebracht ist. Die Isolierung 160 kann auch aus einer Schicht aus Gummi, Kunstgummi, Kunststoff od.dgl. gebildet sein. Von Vorteil kann es sein, wenn die Isolierung 160 z.B. aus einem faserverstärkten Kunststoff gebildet ist. Als Kunststoff kann z.B. ein Polyamid zum Einsatz kommen. Die Isolierung 160 kann generell aus einer Platte und/oder Scheibe und/oder Hülse gebildet sein.

Beim gezeigten zweiten Ausführungsbeispiel in Fig. 2 ist die Isolierung 160 aus einem etwa topfförmigen Teil 161 gebildet, das in der Aufnahmeöffnung 55 des Ventilgehäuses 11 enthalten ist. Der etwa topfförmige Teil 161 überdeckt den in der Aufnahmeöffnung 55 des Ventilgehäuses 11 aufgenommenen Längenabschnitt 56 des Stellorgans 36 boden- und umfangsseitig. Er bildet eine Isolierung gegen einen unmittelbaren Berührungskontakt zwischen den Flächen der Aufnahmeöffnung 55 einerseits und des Längenabschnitts 56 des Stellorgans 36 darin andererseits. Durch die beschriebene Isolierung 160 ist eine Wärmeisolierung zwischen dem Ventilgehäuse 11 und dem Stellorgan 36 erreicht. Dadurch ist sichergestellt, daß vom Ventilgehäuse 11 her keine Wärme auf das Stellorgan 36 übergeleitet wird, die das Arbeitsverhalten des Stellorgans 36 in unerwünschter und unkontrollierbarer Weise beeinflussen und verändern wurde. Vielmehr ist durch die Isolierung des Stellorgans 36 in Bezug auf das Ventilgehäuse 11 sichergestellt, daß das Stellorgan 36 von der Wärme des Ventilgehäuses 11 unbeeinflußt bleibt. Die Isolierung 160 ist einfach und kostengünstig.

Bei einem anderen, nicht gezeigten Ausführungsbeispiel ist zum gleichen Zweck vorgesehen, daß das Stellorgan 36 und/oder das Ventilgehäuse 11 zumindest bereichsweise und dort, wo beide miteinander in Berührungskontakt stehen, Isoliermaterial, z.B. Kunststoff, aufweisen, insbesondere aus derartigem Isoliermaterial bestehen. Dies ist z.B. durch Zwischenlagen aus Isoliermaterial, z.B. Kunststoff, oder dadurch verwirklicht, daß das ganze Ventilgehäuse 11 oder zumindest Flächenbereiche dieses, mit denen das Stellorgan 36 in Berührungskontakt steht, aus Isoliermaterial, z.B. Kunststoff, bestehen oder zumindest damit ausgekleidet sind. Statt dessen oder zusätzlich dazu können auch entsprechende Bereiche des Stellorgans 36, insbesondere des Längenabschnitts 56 dieses, entweder aus Kunststoffmaterial bestehen oder zumindest damit umkleidet sein.

**Patentansprüche**

1. Thermostatventil zur Regelung der Temperatur der Kühlflüssigkeit einer Brennkraftmaschine, insbesondere eines Kraftfahrzeugmotors, das den Kühlmittelfluß von der Brennkraftmaschine durch einen Bypaß und/oder durch einen Wärmeaustauscher zurück zur Brennkraftmaschine regelt, wobei ein einen Dehnstoff enthaltendes Gehäuse (15) vorgesehen ist, das von einer Ventilfeder (16) in Ventilschließrichtung beaufschlagt ist, mindestens einen Ventilteller (17) trägt und einen bei Erwärmung relativ zum Gehäuse (15) ausfahrenden und den Hub des Ventiltellers (17) bewirkenden Arbeitskolben (14) enthält, dem als Widerlager (25) ein verstellbares Abstützteil (26) zugeordnet ist, das mit dem Arbeitskolben (14) verbunden ist und mittels eines Stellorgans (36) verstellbar ist, welches am Ventilgehäuse (11) gehalten ist, **dadurch gekennzeichnet**, daß das Stellorgan (36) am Ventilgehäuse (11) durch eine Bördelverbindung (54) befestigt ist.

2. Thermostatventil zur Regelung der Temperatur der Kühlflüssigkeit einer Brennkraftmaschine, insbesondere eines Kraftfahrzeugmotors, das den Kühlmittelfluß von der Brennkraftmaschine durch einen Bypaß und/oder durch einen Wärmeaustauscher zurück zur Brennkraftmaschine regelt, wobei ein einen Dehnstoff enthaltendes Gehäuse (15) vorgesehen ist, das von einer Ventilfeder (16) in Ventilschließrichtung beaufschlagt ist, mindestens einen Ventilteller (17) trägt und einen bei Erwärmung relativ zum Gehäuse (15) ausfahrenden und den Hub des Ventiltellers (17) bewirkenden Arbeitskolben (14) enthält, dem als Widerlager (25) ein verstellbares Abstützteil (26) zugeordnet ist, das mit dem Arbeitskolben (14) verbunden ist und mittels eines Stellorgans (36) verstellbar ist, welches am Ventilgehäuse (11) gehalten ist, insbesondere nach Anspruch 1, **dadurch gekennzeichnet,** daß das Stellorgan (36) zumindest bereichsweise ohne unmittelbaren Berührungskontakt mit dem Ventilgehäuse (11) gehalten ist.

3. Thermostatventil nach Anspruch 2, **dadurch gekennzeichnet,** daß zwischen den Bereichen des Stellorgans (36), die mit dem Ventilgehäuse (11) in Verbindung stehen, und diesen zugeordneten Bereichen des Ventilgehäuses (11) eine Isolierung (160) vorgesehen ist.

4. Thermostatventil nach Anspruch 3, **dadurch gekennzeichnet,** daß die Isolierung (160) als Wärmeisolierung ausgebildet ist.

5. Thermostatventil nach einem der Ansprüche 2 bis 4, **dadurch gekennzeichnet,** daß die Isolierung (160) aus einer Gas- oder Flüssigkeitsschicht, z.B. Luftschicht, gebildet ist.

6. Thermostatventil nach einem der Ansprüche 2 bis 4 **dadurch gekennzeichnet,** daß die Isolierung (160) aus einer pastösen Schicht, z.B. aus einer Isolierpaste, gebildet ist.

7. Thermostatventil nach einem der Ansprüche 2 bis 6, **dadurch gekennzeichnet,** daß die Isolierung (160) aus einem Isolierfilm gebildet ist.

8. Thermostatventil nach Anspruch 7, **dadurch gekennzeichnet,** daß der Isolierfilm durch Spritzen, Lackieren, Schmelzen od.dgl. aufgebracht ist.

9. Thermostatventil nach einem der Ansprüche 2 bis 8,

**dadurch gekennzeichnet,**
daß die Isolierung (160) aus einer Schicht aus Gummi, Kunstgummi, Kunststoff od.dgl. gebildet ist.

10. Thermostatventil nach Anspruch 9,
**dadurch gekennzeichnet,**
daß die Isolierung (160) aus einem faserverstärkten Kunststoff gebildet ist.

11. Thermostatventil nach Anspruch 9 oder 10,
**dadurch gekennzeichnet,**
daß die Isolierung (160) aus einem Polyamid gebildet ist.

12. Thermostatventil nach einem der Ansprüche 2 bis 11,
**dadurch gekennzeichnet,**
daß die Isolierung (160) aus einer Platte und/oder Scheibe und/oder Hülse gebildet ist.

13. Thermstatventil nach einem der Ansprüche 2 bis 12,
**dadurch gekennzeichnet,**
daß die Isolierung (160) aus einem etwa topfförmigen Teil (161) gebildet ist, das in einer Aufnahmeöffnung (55) des Ventilgehäuses (11) enthalten ist.

14. Thermostatventil nach Anspruch 13,
**dadurch gekennzeichnet,**
daß die Isolierung (160), insbesondere das etwa topfförmige Teil (161), einen in der Aufnahmeöffnung (55) des Ventilgehäuses (11) aufgenommenen Längenabschnitt (56) des Stellorgans (36) boden- und umfangsseitig überdeckt und eine Isolierung gegen einen unmittelbaren Berührungskontakt zwischen den Flächen der Aufnahmeöffnung (55) und des Längenabschnitts (56) darin bildet.

15. Thermostatventil zur Regelung der Temperatur der Kühlflüssigkeit einer Brennkraftmaschine, insbesondere eines Kraftfahrzeugmotors, das den Kühlmittelfluß von der Brennkraftmaschine durch einen Bypaß und/oder durch einen Wärmeaustauscher zurück zur Brennkraftmaschine regelt, wobei ein einen Dehnstoff enthaltendes Gehäuse (15) vorgesehen ist, das von einer Ventilfeder (16) in Ventilschließrichtung beaufschlagt ist, mindestens einen Ventilteller (17) trägt und einen bei Erwärmung relativ zum Gehäuse (15) ausfahrenden und den Hub des Ventiltellers (17) bewirkenden Arbeitskolben (14) enthält, dem als Widerlager (25) ein verstellbares Abstützteil (26) zugeordnet ist, das mit dem Arbeitskolben (14) verbunden ist und mittels eines Stellorgans (36) verstellbar ist, welches am Ventilgehäuse (11) gehalten ist, insbesondere nach einem oder mehreren der Ansprüche 1 bis 14,
**dadurch gekennzeichnet,**
daß das Stellorgan (36) und/oder das Ventilgehäuse (11) zumindest bereichsweise und dort, wo beide miteinander in Berührungskontakt stehen, Isoliermaterial, z.B. Kunststoff, aufweisen, insbesondere aus derartigem Isoliermaterial bestehen.

16. Thermostatventil nach einem der Ansprüche 1 bis 15,
**dadurch gekennzeichnet,**
daß das Ventilgehäuse (11) eine das Stellorgan (36) aufnehmende Aufnahmeöffnung (55) enthält und daß das Stellorgan (36) mit zumindest einem Längenabschnitt (56) innerhalb der Aufnahmeöffnung (55) aufgenommen und gehalten ist.

17. Thermostatventil nach einem der Ansprüche 1 bis 16,
**dadurch gekennzeichnet,**
daß das Stellorgan (36) mit dem Längenabschnitt (56) in die Aufnahmeöffnung (55) eingepaßt ist.

18. Thermostatventil, insbesondere nach einem der Ansprüche 1 - 17, **dadurch gekennzeichnet,** daß das Stellorgan (36) mit dem Längenabschnitt (56) in der Aufnahmeöffnung (55) durch eine Steckverbindung, Renkverbindung od. dgl. gehalten ist.

19. Thermostatventil nach einem der Ansprüche 1 bis 18, **dadurch gekennzeichnet,** daß das Ventilgehäuse (11) am freien Ende der Aufnahmeöffnung (55) einen Bördelrand (57) aufweist, der einen radialen Vorsprung (58), insbesondere eine Ringschulter, des Stellorgans (36) formschlüssig übergreift.

20. Thermostatventil nach einem der Ansprüche 1 bis 19, **dadurch gekennzeichnet,** daß das Ventilgehäuse (11) als Formteil ausgebildet ist, an dem die Aufnahmeöffnung (55) mit Bördelrand (57) ausgeformt ist.

21. Thermostatventil nach einem der Ansprüche 1 bis 20, **dadurch gekennzeichnet,** daß das Stellorgan (36) koaxial zum Arbeitskolben (14) angeordnet ist.

22. Thermostatventil nach einem der Ansprüche 1 bis 21, **dadurch gekennzeichnet,** daß das Stellorgan (36) auf der dem Arbeitskolben (14) benachbarten Axialseite und dabei außerhalb des Inneren (9) des Ventilgehäuses (11) angeordnet ist.

23. Thermostatventil nach einem der Ansprüche 1 bis 22, **dadurch gekennzeichnet,** daß das Stellorgan (36) als temperaturabhängiges Arbeitselement (37) ausgebildet ist.

24. Thermostatventil nach einem der Ansprüche 1 bis 23, **dadurch gekennzeichnet,** daß das Stellorgan (36) als beheizbares, insbesondere elektrisch beheizbares, temperaturabhängiges Arbeitselement (37) ausgebildet ist.

25. Thermostatventil nach einem der Ansprüche 1 bis 24, **dadurch gekennzeichnet,** daß das Stellorgan (36) als Dehnstoffelement ausgebildet ist, das einen in einem Gehäuse (38) enthaltenen Dehnstoff aufweist, in den ein Kolben (39) eintaucht, der aus dem Gehäuse (38) herausgeführt ist.

26. Thermostatventil nach Anspruch 25, **dadurch gekennzeichnet,** daß der Kolben (39) koaxial zum Arbeitskolben (14) angeordnet ist und durch eine Durchgangsöffnung (59) im Ventilgehäuse (11) hindurch in das Innere (9) des Ventilgehäuses (11) geführt ist.

27. Thermostatventil nach Anspruch 25 oder 26, **dadurch gekennzeichnet,** daß das Abstützteil (26) mit dem Kolben (39) und mit dem Arbeitskolben (14) in Zug- und Druckrichtung fest verbunden ist.

28. Thermostatventil nach einem der Ansprüche 25 bis 27, **dadurch gekennzeichnet,** daß zwischen dem Stellorgan (36), insbesondere temperaturabhängigen Arbeitselement (37), und dem Ventilgehäuse (11) eine das Innere (9) des Ventilgehäuses (11) im Bereich der Durchgangsöffnung (59) nach außen abdichtende Dichtung (60), z.B. eine Dichtungsscheibe, ein Dichtungsring, ein O-Ring od. dgl., angeordnet ist.

Fig. 1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4 890 790 (WAGNER) | 1-4,9, 12-17, 19, 21-26,28 | F01P7/16 G05D23/13 |
| Y | * Spalte 5, Zeile 31 - Zeile 64; Abbildungen * --- | 5 | |
| Y | GB-A-2 155 153 (GILARDINI) * Seite 2, Zeile 93 - Zeile 100; Abbildungen * --- | 5 | |
| A | US-A-4 560 104 (NAGUMO ET AL.) * Abbildung 7 * ----- | 1,20 | |

RECHERCHIERTE SACHGEBIETE (Int. Cl.5 )

F01P
G05D

Der vorliegende Recherchenbericht wurde für alle Patentansprüche erstellt

| Recherchenort | Abschlußdatum der Recherche | Prüfer |
|---|---|---|
| DEN HAAG | 29 JANUAR 1992 | KOOIJMAN F.G.M. |